# EUROPEAN PATENT APPLICATION

(11) **EP 3 521 802 A2**
(43) Date of publication of application: **07.08.2019**
(21) Application number: 19152394.3
(22) Date of filing: 17.01.2019
(51) Int. Cl.: G01N 3/307

(54) **TEST RESULT EVALUATING METHOD AND MATERIAL TESTER**

(30) Priority: 01.02.2018 JP 2018016577
(71) Applicant: Shimadzu Corporation, Kyoto 604-8511 (JP)
(72) Inventor: MATSUURA, Tohru, Kyoto-shi,, Kyoto 6048511 (JP)
(74) Representative: Mewburn Ellis LLP

(57) **Abstract**

A material tester capable of presenting information enabling a user to easily determine whether or not a filtering condition is appropriate is provided. A personal computer (42), as functional blocks of a program installed in a memory (53), includes a filtering processing part (61) that eliminates noise from raw data acquired by digitalizing an input signal from a load cell or an extensometer, a filter setting part (62) that sets a filtering condition applied to the raw data in the filtering processing part (61), and a display control part (65) that displays the raw data and the processed data, for which the filtering process has been performed by the filtering processing part (61), at the same scale and in different forms on a display device (51) in an overlapping manner.

## Description

### BACKGROUND

### Technical Field

The disclosure relates to a material tester executing a material test by applying a test force to a test subject.

### Description of Related Art

In order to evaluate the characteristics of materials, various material tests according to types and properties of materials are performed. A material tester executing a material test includes a load mechanism that applies a test force to a test piece that is a testing target and a force detector that is used for detecting a force applied to the test piece in the execution (see Patent Document 1). In addition, in a material tester applying a high-speed tensile load to a test piece, a displacement (expansion) of the test piece is measured by an extensometer of a contact type or the like mounted on the test piece. Then, the signals of the force detector and the extensometer are input to a control device, and are displayed on a display device as a test force and displacement according to calculation based on the signals executed by the control device (refer to Patent Document 2).

### Patent Documents

[Patent Document 1] Japanese Laid-Open No. 2004-333221
[Patent Document 2] PCT Publication No. WO2008/081505

### SUMMARY

A test force or a displacement of a test piece displayed on a display device, as described in Patent Document 2, is determined through calculation executed by the control device. In the calculation executed by the control device, a filtering process of eliminating noise from raw data is included, and data after the filtering process is displayed in data display of a conventional display device. For this reason, a user cannot determine whether or not settings for a filter used for the filtering process are appropriate or the like at a glance.

Particularly, in a high-speed tension test for a plastic material, a test time is short, and sampling at short time intervals is necessary when data is collected. Accordingly, a large amount of noise tends to be detected. Sometimes, it is found that noise according to a natural vibration of a system including a tester main body and a jig such as a chuck gripping a test piece is added to the noise. Conventionally, while a peak on an approximation curve after a filtering process is automatically detected and is registered as a maximum test force point, there are cases in which settings for a filter are inappropriate, and a detection position of a maximum test force point is shifted from the position of a test force peak of raw data between before and after the filtering process. Also, depending on the filter, the gradient according to the measurement values may become unclear. Conventionally, in display of test results, since a display device displays only the data after the filtering process, the user may not be able to recognize such a deviation of the detection position of the maximum test force point or a change in the gradient. Thus, even if the numerical values in an evaluation of material characteristics such as an elastic modulus, which is determined using the data after the filtering process through further calculation, are not sufficiently reliable, a problem arises in that a user may not notice this.

The disclosure has been realized for solving the problems described above, and an objective thereof is to provide a material tester capable of presenting information enabling a user to easily determine whether or not filtering conditions are appropriate.

According to a first aspect of the disclosure, there is provided a material tester including: a control device that processes a signal detected by a physical quantity detector in a material test in which a test force is applied to a test subject by driving a load mechanism; and a display device that displays a test result. The control device includes: a filtering processing part that eliminates noise from raw data acquired by digitalizing an input signal from the physical quantity detector; a filter setting part that sets a filtering condition applied to the raw data in the filtering processing part; and a display control part that displays the raw data and processed data, for which the filtering process has been performed by the filtering processing part, at the same scale and in different forms on the display device in an overlapping manner.

According to a second aspect of the disclosure, in the material tester according to the first aspect of the disclosure, the display control part displays the raw data based on different input signals from a plurality of physical quantity detectors and the processed data on the display device at the same scale and in different forms in an overlapping manner for each of the physical quantities.

According to a third aspect of the disclosure, in the material tester according to the first aspect of the disclosure, the display control part displays a plurality of pieces of data processed using different filtering conditions on the display device at the same scale and in different forms in an overlapping manner.

According to a fourth aspect of the disclosure, in the material tester according to any one of the first aspect to the third aspect of the disclosures, the different forms are representations using different hues, different brightnesses, different saturations or different types of line.

According to a fifth aspect of the disclosure, in the material tester according to any one of the first aspect to the fourth aspect of the disclosures, the physical quantity detector is a force detector detecting a test force applied to the test subject and/or a displacement meter detecting a displacement occurring in the test subject.

According to a sixth aspect of the disclosure, in the material tester according to any one of the first aspect to the fifth aspect of the disclosures, the control device includes a focus point detecting part that detects a focus point from the processed data, and the display control part displays the focus point on the display device.

According to a seventh aspect of the disclosure, in the material tester according to the sixth aspect of the disclosure, the control device includes a focus point changing part that changes a position of the focus point detected by the focus point detecting part.

According to the first aspect to the seventh aspect of the disclosures, the control device displays the raw data and the processed data, for which the filtering process has been performed, at the same scale and in different forms on the display device in an overlapping manner, and accordingly, a user can acquire information used for easily determining whether or not the filtering condition is appropriate from the data display of the test result.

According to the second aspect of the disclosure, the control device executes display control for displaying the raw data based on different input signals from a plurality of physical quantity detectors and the processed data on the display device at the same scale and in different forms in an overlapping manner for each of the physical quantities, whereby a user can recognize changes in the different physical quantities at a glance.

According to the third aspect of the disclosure described, the control device executes display control for displaying a plurality of pieces of data processed using different filtering conditions on the display device at the same scale and in different forms in an overlapping manner, whereby a user can determine an appropriate filtering condition while comparing data for which different processes have been performed.

According to the fourth aspect of the disclosure described, display is performed in which in the raw data and the processed data for which the filtering process has been performed, each piece of data based on input signals from different physical quantity detectors, and a plurality of pieces of data processed using different filtering conditions are represented using different types of line, whereby a user can easily identify each piece of data on the screen.

According to the sixth aspect of the disclosure described, the control device includes a focus point detecting part, and the focus point detecting parts executes display control for displaying focus points such as a starting point, a maximum point, and a breaking point on the processed data detected by the focus point detecting part on the display device, whereby a user can easily acquire a positional deviation of the focus point of the processed data from the raw data.

According to the seventh aspect of the disclosure described, the control device includes a focus point changing part, and a position of the focus point, which has been detected by the focus point detecting part, on the processed data can be changed, whereby a user can reset the focus point to a position acquired by taking the values of the raw data into account, and the reliability of evaluation values of material characteristics calculated using the focus point can be improved.

### BRIEF DESCRIPTION OF THE DRAWINGS

Fig. 1 is a diagram illustrating an overview of a material tester according to the disclosure;
Fig. 2 is a block diagram illustrating a main control system of a material tester according to the disclosure;
Fig. 3 is an example of display of a graph of a test result;
Fig. 4 is an example of display of a graph of a test result;
Fig. 5 is an example of display of a graph of a test result;
Fig. 6 is an example of display of a graph of a test result;
Fig. 7 is an example of display of a graph of a test result;
Fig. 8 is an example of display of a graph of a test result;
Fig. 9 is an example of display of a graph of a test result;
Fig. 10 is an example of display of a graph of a test result;
Fig. 11 is an example of display of a graph of a test result; and
Fig. 12 is a block diagram illustrating a main control system of a material tester according to another embodiment of the disclosure.

### DESCRIPTION OF THE EMBODIMENTS

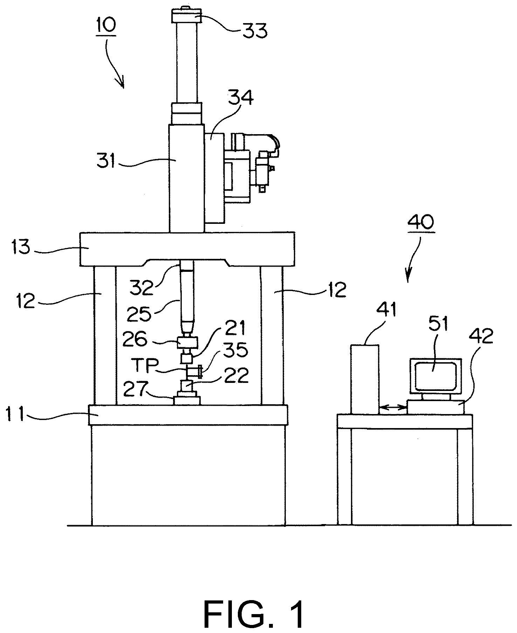

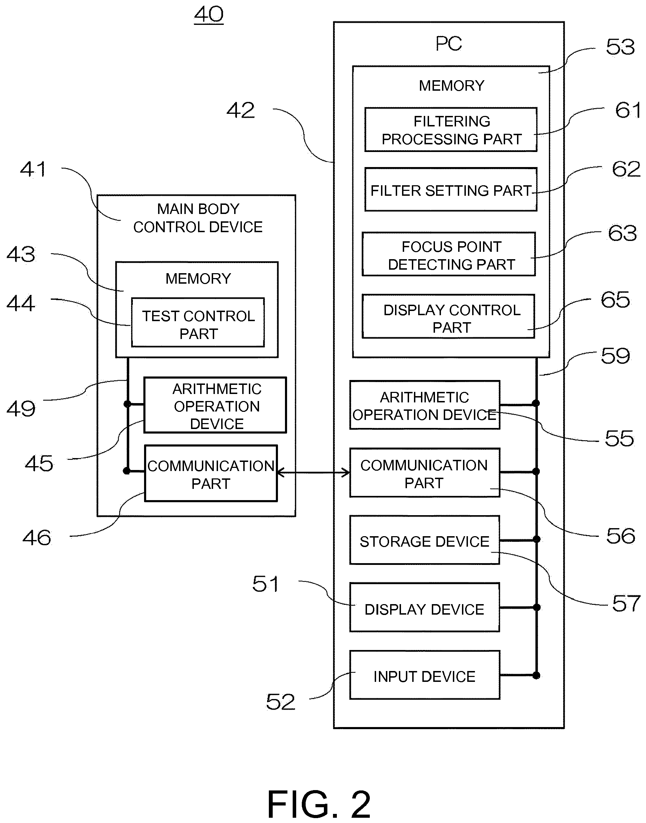

Hereinafter, embodiments of the disclosure will be described with reference to the drawings. Fig. 1 is a diagram illustrating an overview of a material tester according to the disclosure. Fig. 2 is a block diagram illustrating a main control system of the material tester according to the disclosure.

This material tester executes a high-speed tension test of rapidly applying a shocking tensile force to a test piece TP and includes a tester main body 10 and a control device 40. The tester main body 10 includes a table 11, one pair of support posts 12 erected on the table 11, a cross yoke 13 stretched over the one pair of support posts 12, and a hydraulic cylinder 31 fixed to the cross yoke 13.

The hydraulic cylinder 31 is connected to a hydraulic power source (not illustrated in the drawing) disposed inside the table 11 through a servo valve 34 and operates in accordance with a hydraulic oil supplied from the hydraulic power source. An upper chuck 21 is connected to a piston rod 32 of the hydraulic cylinder 31 through a run-up jig 25 and a joint 26. Meanwhile, a lower chuck 22 is connected to the table 11 through a load cell 27 that is a force detector. In this way, this tester main body 10 has a configuration for executing a high-speed tension test for rapidly separating one pair of chucks, which grip both end portions of the test piece TP, away from each other by disposing a run-up section in a pulling direction using the run-up jig 25 and lifting a piston rod 32 at a high speed of 0.1 to 20 m/s. A displacement (stroke) of a load mechanism at the time of execution of a high-speed tension test, in other words, a moving amount of the piston rod 32 is detected by a stroke sensor 33, and a test force at that time is detected by the load cell 27.

In addition, an extensometer 35, which is a displacement system detecting a displacement occurring in the test piece TP, is disposed on the test piece TP. The extensometer 35 is directly attached to a test piece TP for measuring the expansion of the test piece TP and, for example, has a structure as disclosed in Japanese Unexamined Patent Application Publication No. 2006-10409. In other words, fixing tools respectively fixed to marked lines at two positions set in the test piece TP, a pipe formed from a conductor fixed to one fixing tool, and a coil inserted into the inside of a pipe fixed to the other fixing tool to be movable are included, and a change in inductance of a coil based on a change in the amount of insertion of the coil with respect to the pipe is detected, and an expansion of the test piece TP between the marked lines is measured. In addition, the displacement system may be the stroke sensor 33 or a non-contact type extensometer such as a high-speed video camera.

The control device 40 is composed of a main body control device 41 used for controlling the operation of the tester main body 10 and a personal computer 42. The main body control device 41 includes a memory 43 that stores a program, an arithmetic operation device 45 such as a micro processing unit (MPU) that executes various arithmetic operations, and a communication part 46 that communicates with the personal computer 42. The memory 43, the arithmetic operation device 45, and the communication part 46 are interconnected through a bus 49. In addition, the main body control device 41 includes a test control part 44 as a functional component. The test control part 44 is stored in the memory 43 as a test control program. In a case in which a high-speed tension test is executed, by executing the test control program, a control signal is supplied to the servo valve 34, and the hydraulic cylinder 31 operates. In the main body control device 41, signal input/output parts respectively corresponding to physical quantity detectors such as the load cell 27, the extensometer 35, and the like are disposed, and an output signal of the stroke sensor 33, an output signal of the load cell 27, and an output signal of the extensometer 35 are digitalized and are taken in by the main body control device 41 at predetermined time intervals.

The personal computer 42 includes a ROM that stores a data analysis program, a memory 53 formed by a RAM that loads a program and temporarily stores data at the time of execution of a program and the like, an arithmetic operation device 55 such as a central processing unit (CPU) executing various arithmetic operations, a communication part 56 that communicates with an externally-connected device such as the main body control device 41, a storage device 57 that stores data, a display device 51 on which a test result is displayed, and an input device 52 that is used for inputting test conditions. A program realizing a function by operating the arithmetic operation device 55 is stored in the memory 53. In addition, the storage device 57 is a storage part that stores certain time series data that is raw data of a test force input from the load cell 27 or the like and is configured by a large-capacity storage device such as a hard disk drive (HDD). The memory 53, the arithmetic operation device 55, the communication part 56, the storage device 57, the display device 51, and the input device 52 are interconnected through a bus 59.

In Fig. 2, programs that are installed in the personal computer 42 and are stored in the memory 53 are illustrated as functional blocks. In this embodiment, as functional blocks, a filtering processing part 61 that eliminates noise from raw data that is acquired by digitalizing an input signal from the load cell 27 or the extensometer 35, a filter setting part 62 that sets filtering conditions applied to the raw data by the filtering processing part 61, and a display control part 65 that displays the raw data and processed data for which the filtering process has been performed by the filtering processing part 61 on the display device 51 at the same scale in different forms in an overlapping manner are included. In addition, the noise elimination performed by the filtering processing part 61 includes elimination of measurement noise due to electrical fluctuation of the load cell 27 and the extensometer 35 and elimination of a natural vibration occurring in a system including the tester main body 10 and the lower chuck 22 connected to the load cell 27. In addition, in the filter setting part 62, as types of filters, several filters such as a moving average filter, a median filter, and a low-pass filter may be provided.

In this embodiment, a focus point detecting part 63 is included as a functional block stored as a program in the memory 53. The focus point detecting part 63 determines focus points focused upon in an evaluation of the strength of a material such as a starting point, a maximum test force point, a breaking point, and other inflection points from data after the filtering process through automatic calculation. In other words, the specifying of focus points is realized by the arithmetic operation device 55 executing a program read from the focus point detecting part 63 of the memory 53. The specified focus points are automatically assigned in a graph of the data after the filtering process displayed on the display device 51 in accordance with an operation of the display control part 65.

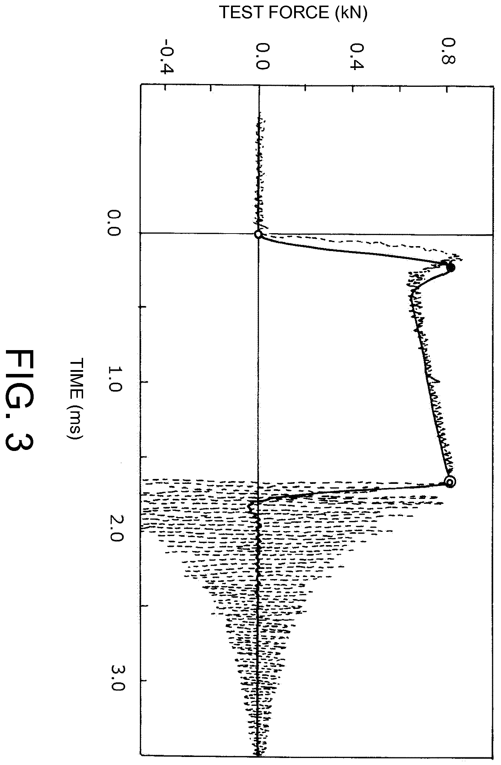

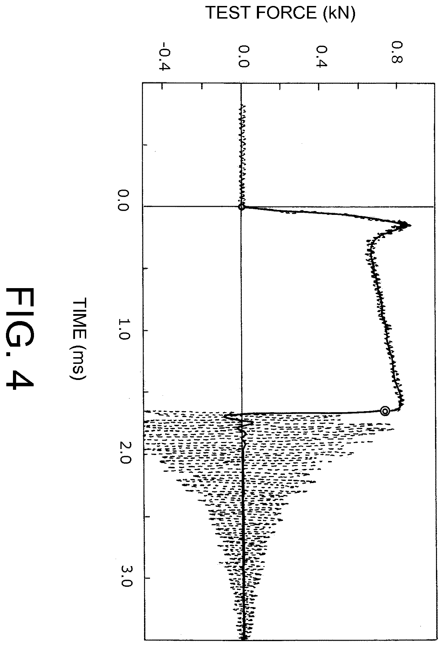

The display of a test result on the display device 51 when a high-speed tension test is executed using a material tester having such a configuration will be described. Figs. 3 and 4 are examples of display of a test result graph. This test result represents a time-series data of a test force when a tension test is executed at a high speed (for example, a test speed of 20 m/s). In the graph, the vertical axis represents a test force (kilonewtons (kN)), and the horizontal axis represents time (milliseconds (ms)). In such graphs, raw data is denoted by a broken line, and processed data after the filtering process is denoted by a solid line.

The raw data that is input from the main body control device 41 to the personal computer 42 through the communication part 46 or 56 and is digitalized is stored in the storage device 57 as a data array in time. Then, the filtering process is performed by the filtering processing part 61 for the raw data, and the processed data after the filtering process is also stored in the storage device 57 as a data array in time. The raw data and the processes data after the filtering process are displayed on the display device 51 in a graph form selected by a user such as a graph representing a test force with elapse of time or a load-displacement curve in accordance with an operation of the display control part 65.

In the graphs illustrated in Figs. 3 and 4, the processed data after the filtering process is displayed to be superimposed on the raw data. In addition, in the data after the filtering process, a starting point (denoted by a white circle in the drawing), a maximum test force point (denoted by a black circle in the drawing), and a breaking point (denoted by a white double circle in the drawing) are marked.

In Fig. 3, a maximum test force point of the processed data after the filtering process does not coincide with a peak top of a test force of the raw data, and the phase of the data has deviated backward. Such a phase deviation can be determined by a user at a glance by displaying the raw data and the processed data after the filtering process in an overlapping manner. In order to remove such as phase deviation, a user can perform improvement by changing to a type of filter that eliminates a natural vibration. In other words, a user changes filter settings to be set by the filter setting part 62 by operating the input device 52, thereby applying a filter of a different type.

In the graph illustrated in Fig. 4 acquired by changing the filter setting, the phase deviation between the processed data after the filtering process and the raw data is resolved, and it can be understood that the starting point, the maximum test force point, and the breaking point are also on the raw data denoted by a broken line. In this way, by displaying the raw data and the processed data after the filtering process on the same screen in the same scale in an overlapping manner, a user can easily check whether a phase deviation between the raw data and the processed data has occurred, whether the filter setting is appropriate, and the like. For convenience of description, the raw data is denoted by a broken line, and the processed data after the filtering process is denoted by a solid line in the graph, but when the data is displayed in an overlapping manner, the data is not limited to being represented using lines of different types when the data is displayed in an overlapping manner. In other words, representations in different forms in the disclosure includes display in different colors, and the different colors include various representations using differences in the hue, brightness, and saturation such as a representation in which the display of the processed data after the filtering process is emphasized by decreasing the brightness or saturation of the raw data, and a representation in which a different hue is assigned to each piece of data.

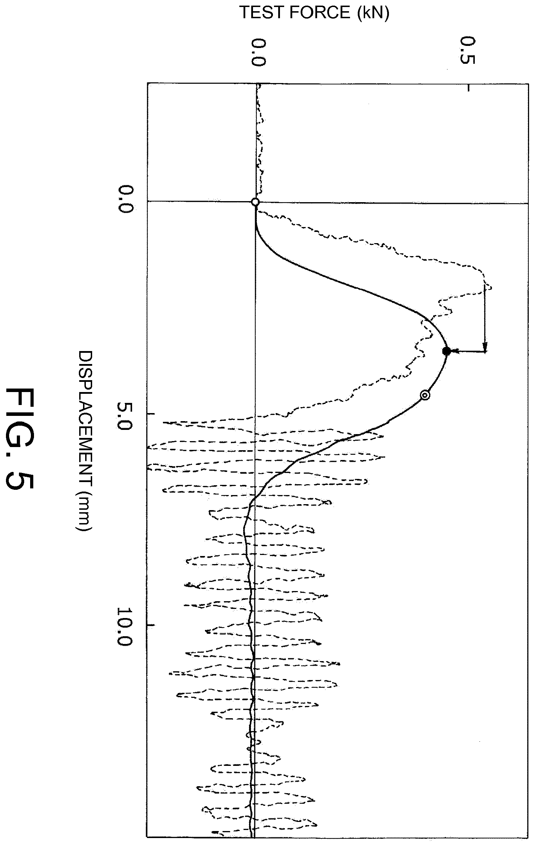

Figs. 5 to 7 are display examples of graphs of test results and illustrate load - displacement curves. In such graphs, the vertical axis represents a test force (kilo Newton (kN), and the horizontal axis represents a displacement (millimeters (mm)). In such graphs, raw data is denoted by a broken line, and processed data after a filtering process is denoted by a solid line. Also in such drawings, a starting point (denoted by a white circle in the drawing), a maximum test force point (denoted by a black circle in the drawing), and a breaking point (denoted by a white double circle in the drawing) are marked on the data after the filtering process.

In the display example illustrated in Fig. 5, by displaying the processed data after the filtering process to be superimposed on the raw data, it is able to be confirmed that a displaced position of a maximum test force point in the processed data after the filtering process has deviated from the position of the maximum test force in the raw data, and a peak value of the test force in the processed data after the filtering process attenuates. In a case in which the displaced position of the maximum test force point deviates in accordance with the filtering process, and the peak value of the test force attenuates, the gradient of a straight line in an elastic area (an area in which data changes linearly) becomes gentle, and the elasticity is estimated to be lower than the original elasticity. In such a case, a user changes the type of filter that eliminates a natural vibration.

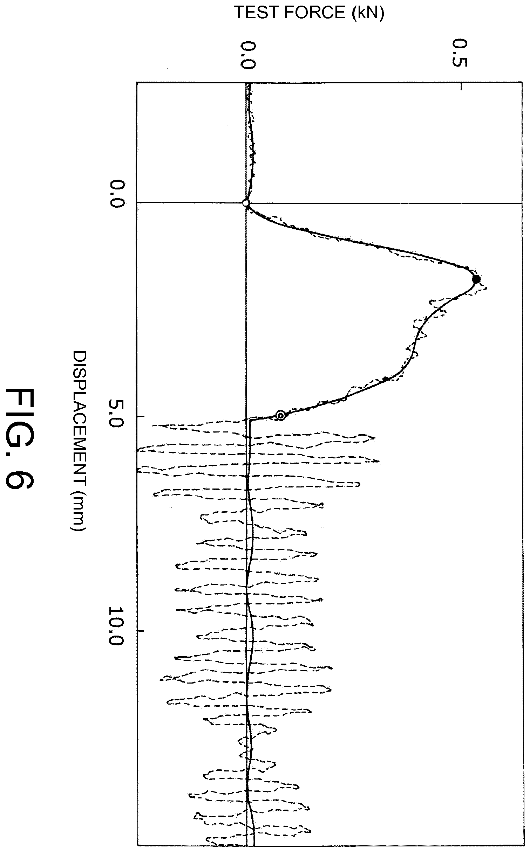

Fig. 6 is a result of execution of a filtering process by applying a filter of a different type to the same raw data as illustrated in Fig. 5. In the display example illustrated in Fig. 6, there is no deviation in the displaced position of the maximum test force point between raw data and processed data after the filtering process, and a peak value of the test force is not decreased. Accordingly, the gradient of data in an elastic area immediately after a starting point almost coincides between the raw data and the processed data after the filtering process, and the elasticity can be accurately determined.

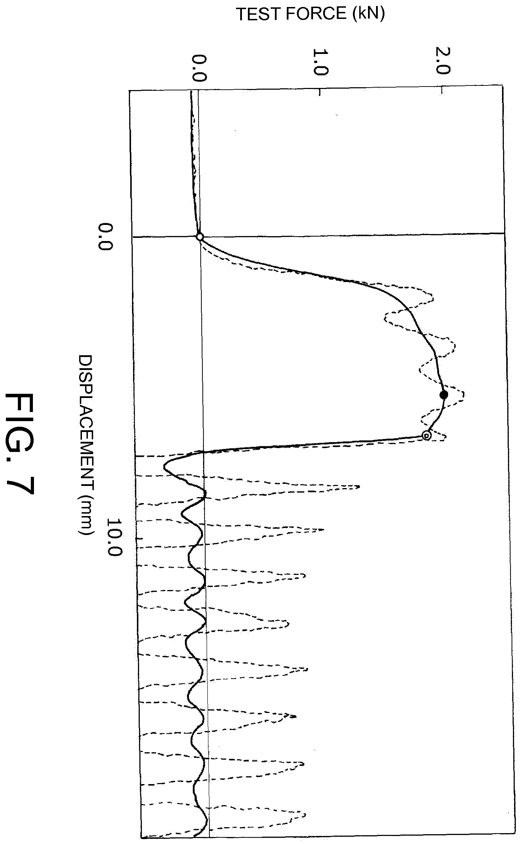

In the display example illustrated in Fig. 7, by displaying the processed data after the filtering process to be superimposed on the raw data, it can be read that a large influence due to a natural vibration appears in the raw data in a data area in a state in which a test force is applied to a test piece TP from a starting point to a breaking point. By seeing a degree of the amplitude of the waveform of the raw data between the starting point to the breaking point for the processed data after the filtering process using such a graph display, a user can acquire material for determination of the reliability of a test result.

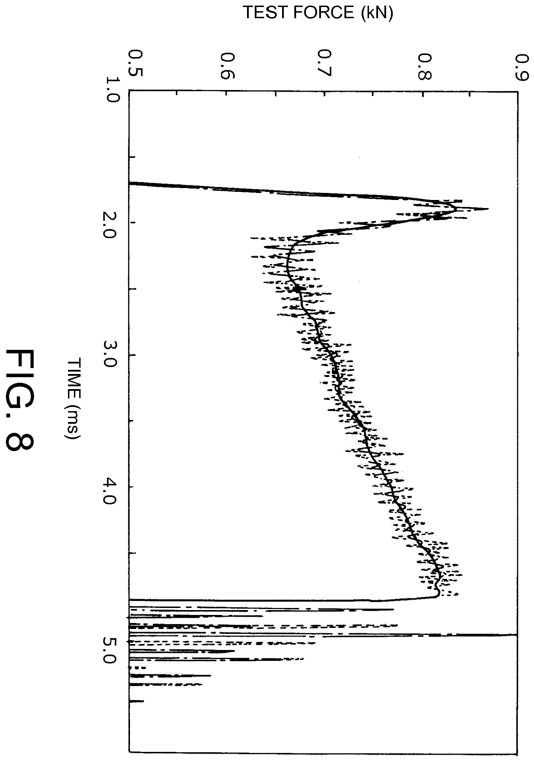

Fig. 8 is a display example of a graph of a test result, in which a part of the time-series data of the test force illustrated in Fig. 4 is represented in an enlarged scale, and processed data after two filtering processes in which the intensity of filters of the same kind is changed is represented to be superimposed on the raw data. In the graph, the vertical axis represents a test force (kilo Newton (kN)), and the horizontal axis represents time (milliseconds (ms)). In this graph, raw data is denoted by a broken line, processed data after a filtering process to which a filter having a weak strength is applied is denoted by a dashed line, and processed data after the filtering process to which a filter having a high strength is applied is denoted by a solid line.

In the display example illustrated in Fig. 8, by changing the strength of the filter smoothing data in two stages and displaying processed data after two filtering processes to be superimposed on the raw data, a user can easily check whether or not the filter strength is appropriate at a glance. A change in the filter strength can be performed, for example, by changing the cutoff frequency in stages if it is a low-pass filter, or by changing the range of a frequency band passing through a filter if it is a band-pass filter, such that the user can perform selection in stages. In addition, in this display example, for the convenience of description, each piece of data is denoted by using a different type of line. However, a display in which coloring using the same hue with different brightness or saturation is applied to each piece of data may be performed like a display in which a shade of color is applied in accordance with the strength of the filter or the like. In addition, each piece of data may be displayed by further combining a different hue or a different type of line.

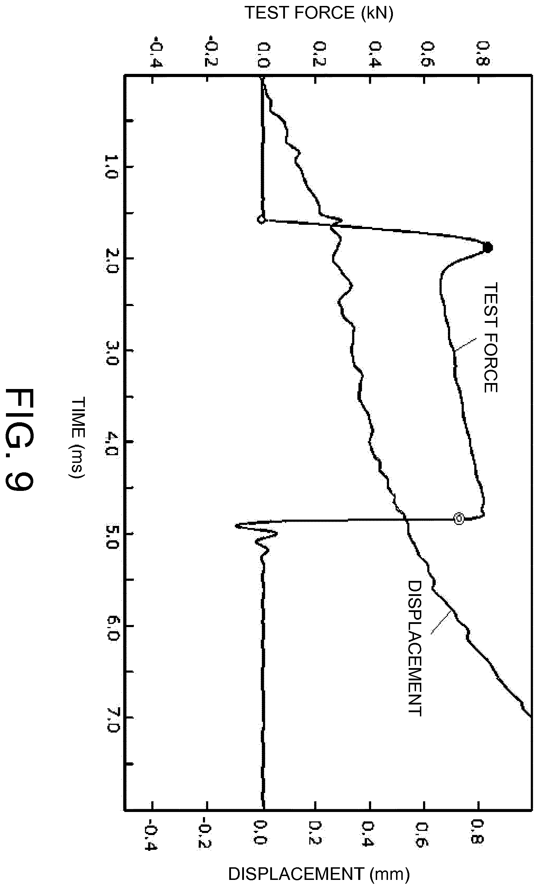

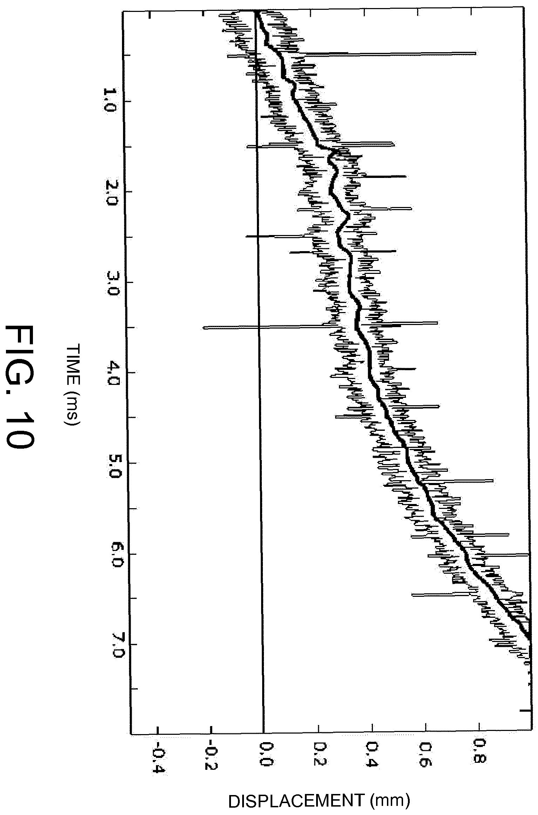

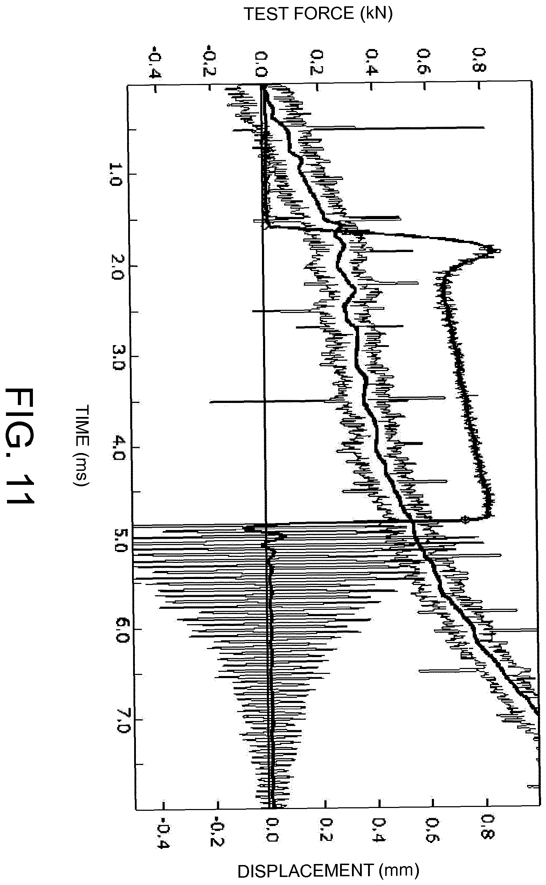

Figs. 9 to 11 are display examples of graphs of test results, and, on the basis of input signals from the load cell 27 and the extensometer 35 that are different physical quantity detectors, each piece of data of a test force and a displacement of the same time series is displayed on the same screen in the same scale. In the graphs illustrated in Figs. 9 and 11, the left vertical axis represents a test force (kilo Newton (kN)), the right vertical axis represents a displacement (millimeters (mm)), and the horizontal axis represents time (milliseconds (ms)). In addition, in the graph illustrated in Fig. 10, the vertical axis represents a displacement (millimeters (mm)), and the horizontal axis represents time (milliseconds (ms)). In such graphs, raw data is denoted by a thin line, and processed data after a filtering process is denoted by a thick line. In Figs. 10 and 11, the contour of the raw data of the displacement is denoted by a thin line.

Similar to the display example illustrated in Fig. 9, different series (a test force and a displacement) are displayed in the same time axis (same scale) on the screen in an overlapping manner. For the convenience of the drawing, although a test force and a displacement are illustrated using the same type of line, in actual display, a different hue is assigned to each different series for visual identification. For example, the test force may be represented in blue, and the displacement may be represented in red.

In addition, switching to a display, like a display example illustrated in Fig. 10, in which processed data of a displacement after the filtering process is superimposed on raw data of the displacement from the display example illustrated in Fig. 9 may be performed.

Fig. 11 shows an example of display in which processed data for a test force after filtering is displayed to be superimposed on the raw data for the test force and a displacement graph shown in Fig. 10 is superimposed thereon. When displaying data of different series such as raw data and processed data after the filtering process as described above, a hue may be assigned to each series, such as a blue color for a test force, and a red color for displacement, and the like, and thus for raw data and processed data after the filtering process, it is possible to aid visual identification of the respective data by changing the saturation and the brightness.

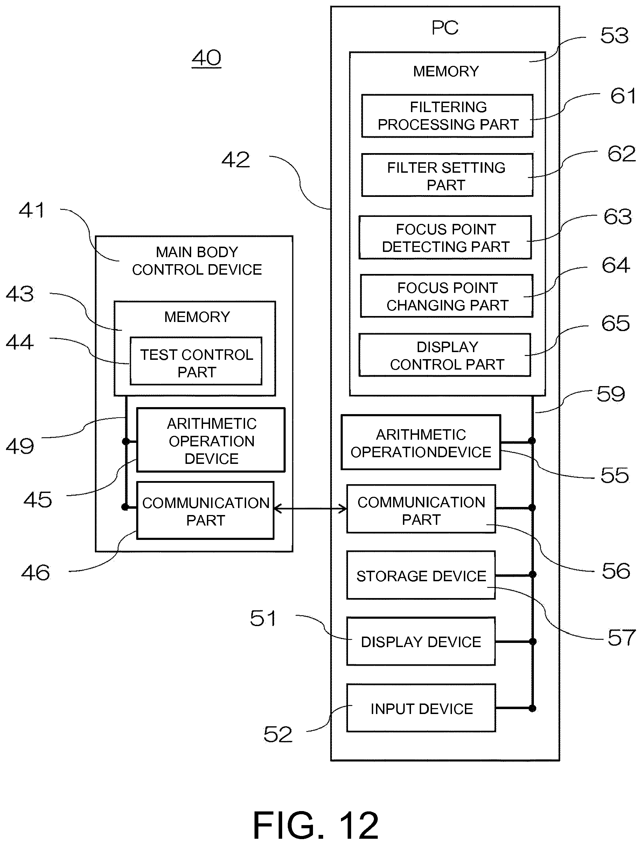

Fig. 12 is a block diagram illustrating a main control system of a material tester according to another embodiment of the disclosure. It should be noted that the same reference numerals are given to components which are the same as those described previously with reference to FIG. 2, and a detailed description thereof will be omitted.

In this embodiment illustrated in Fig. 12, in addition to the components of the embodiment illustrated in Fig. 2, a focus point changing part 64 is included in the memory 53 as a functional component. For example, as illustrated using black circles in the display examples illustrated in Figs. 4 and 6, the position of a maximum test force point that is automatically detected by an operation of the focus point detecting part 63 does not completely coincide with a position at which a maximum test force value is recorded in the raw data. In a case in which it is desired that the maximum test force point should approach the position at which the maximum test force value is recorded in the raw data, a user moves a black circle representing the maximum test force point to a desired position by operating the input device 52 while seeing the screen. At this time, the arithmetic operation device 55 executes a program read from the focus point changing part 64 of the memory 53, whereby the desired position is registered as the maximum test force point and is stored in the storage device 57.

In addition, in the embodiment described above, although the change of the position of the maximum test force point that is a focus point in a test result of the high-speed tension test has been described, the starting point or the breaking point may be changed to a user's desired position. Accordingly, the user can reset a focus point to a position acquired by taking the value of the raw data into account, and the reliability of evaluation values of material characteristics calculated using focus points can be improved.

In the embodiment described above, although a high-speed tension test has been described, in a high-speed compression test in which a compressed load is applied to a test body such as concrete, a punching test, or the like, the disclosure can be applied so that a user can check at a glance whether or not a filtering process is appropriately performed or whether or not detection of a focus point is appropriate.

### [Reference Signs List]

10 Tester main body
11 Table
12 Support post
13 Cross yoke
21 Upper chuck
22 Lower chuck
25 Run-up jig
26 Joint
27 Load cell
31 Hydraulic cylinder
32 Piston rod
33 Stroke sensor
34 Servo valve
35 Extensometer
40 Control device
41 Main body control device
42 Personal computer
43 Memory
44 Test control part
45 Arithmetic operation device
46 Communication part
51 Display device
52 Input device
53 Memory
55 Arithmetic operation device
56 Communication part
57 Storage device
61 Filtering processing part
62 Filter setting part
63 Focus point detecting part
64 Focus point changing part
65 Display control part
TP Test piece

## Claims

1. A material tester **characterized by** comprising:
a control device (40) configured to process a signal detected by a physical quantity detector in a material test in which a test force is applied to a test subject by driving a load mechanism; and
a display device (51) configured to display a test result,
wherein the control device (40) comprises:
a filtering processing part (61) configured to eliminate noise from raw data acquired by digitalizing an input signal from the physical quantity detector;
a filter setting part (62) configured to set a filtering condition applied to the raw data in the filtering processing part (61); and
a display control part (65) configured to display the raw data and processed data, for which a filtering process has been performed by the filtering processing part (61), at a same scale and in different forms on the display device (51) in an overlapping manner.

2. The material tester according to claim 1,
wherein the display control part (65) displays the raw data based on different input signals from a plurality of physical quantity detectors and the processed data on the display device (51) at a same scale and in different forms in an overlapping manner for each of physical quantities.

3. The material tester according to claim 1,
wherein the display control part (65) displays a plurality of pieces of data processed using different filtering conditions on the display device (51) at a same scale and in different forms in an overlapping manner.

4. The material tester according to any one of claims 1 to 3,
wherein the different forms are representations using different hues, different brightnesses, different saturations or different types of line.

5. The material tester according to any one of claims 1 to 4,
wherein the physical quantity detector comprises a force detector detecting the test force applied to the test subject and/or a displacement meter detecting a displacement occurring in the test subject.

6. The material tester according to any one of claims 1 to 5,
wherein the control device (40) comprises a focus point detecting part (63) that detects a focus point from the processed data, and
wherein the display control part (65) displays the focus point on the display device (51).

7. The material tester according to claim 6,
wherein the control device (40) comprises a focus point changing part (64) that changes a position of the focus point detected by the focus point detecting part (63).
